# EUROPEAN PATENT SPECIFICATION

(11) **EP 2 950 468 B1**
(45) Date of publication and mention of the grant of the patent: **08.03.2017**
(21) Application number: 15169776.0
(22) Date of filing: 29.05.2015
(51) Int. Cl.: H04B 17/318, H04W 52/36

(54) **DETERMINING RADIATION EXPOSURE**
STRAHLUNGSEXPOSITIONSBESTIMMUNG
DÉTERMINATION D'UNE EXPOSITION À UN RAYONNEMENT

(30) Priority: 30.05.2014 FI 20145495
(43) Date of publication of application: 02.12.2015
(73) Proprietor: Cellraid Ltd, 90100 Oulu (FI)
(72) Inventor: Niemi, Pasi, 90100 Oulu (FI); Kankaala, Markku, 90100 Oulu (FI)
(74) Representative: Kolster Oy Ab

(56) References cited:
- EP-A1- 2 410 661
- US-A1- 2010 203 862
- US-A1- 2013 178 240

## Description

### Field of the invention

The exemplary and non-limiting embodiments of the invention relate generally to wireless communication systems. Embodiments of the invention relate especially to apparatuses, methods, and computer program products in determining radiation exposure in wireless communication systems.

### Background of the invention

The use of mobile communication devices has increased in recent decades. At first mobile phones were used extensively for making voice calls. As technology has developed and made high bandwidth data communication possible, the use of mobile devices for data transfer has increased to such extent that mobile data transfer may be even more common than voice calls. The use of modern data services, including email and social media, often require almost continuous connection to networks. The users of user terminals may have enabled the user terminals to connect to network on their own without active user intervention.

The mobile communication devices communicate with communications networks using radio frequency transmissions. The effect of electromagnetic radio frequency radiation on users has been studied in recent years but no conclusive results on the harmful effects have yet been discovered. All radio communication devices must fulfil government issued safety criteria regarding radiation properties. However, users of the devices may want to monitor radiation exposure themselves. US2013/178240, EP2410661 and US2010/203862 disclose solutions for determining radiation power level of terminals.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided an apparatus, comprising: at least one processor; and at least one memory including computer program code, the at least one memory and the computer program code configured to, with the at least one processor, cause the apparatus at least to: receive information on the power level of signals at least one radio transceiver of a user terminal has received from more than one external transmitters; determine information on the power level of the signals transmitted by the at least one radio transceiver of the user terminal; determine information on the call connection and data transfer status of the user terminal: receive information from one or more sensors of the user terminal; determine the amount of electromagnetic radiation the user of the user terminal is exposed to separately for call connections and data transfer traffic on the basis on the received and determined information and properties of the user terminal; and store information on the determined amount in the memory separately for each external transmitter.

According to an aspect of the present invention, there is provided a method in an apparatus, comprising: receiving information on the power level of signals at least one radio transceiver of a user terminal has received from more than one external transmitters; determining information on the power level of the signals transmitted by at the least one radio transceiver of the user terminal; determining information on the call connection and data transfer status of the user terminal: receiving information from one or more sensors of the user terminal; determining the amount of electromagnetic radiation the user of the user terminal is exposed to separately for call connections and data transfer traffic on the basis on the received and determined information and properties of the user terminal; storing information on the determined amount in the memory separately for each external transmitter; and controlling the transmission of the information on the determined amount to a network server.

According to an aspect of the present invention, there is provided a computer program product embodied on a distribution medium readable by a computer and comprising program instructions which, when loaded into an apparatus, execute the steps: receiving information on the power level of signals at least one radio transceiver of a user terminal has received from more than one external transmitters; determining information on the power level of the signals transmitted by the at least one radio transceiver of the user terminal; determining information on the call connection and data transfer status of the user terminal: receiving information from one or more sensors of the user terminal; determining the amount of electromagnetic radiation the user of the user terminal is exposed to separately for call connections and data transfer traffic on the basis on the received and determined information and properties of the user terminal; storing information on the determined amount in the memory separately for each external transmitter; and controlling the transmission of the information on the determined amount to a network server.

### List of drawings

In the following the invention will be described in greater detail by means of preferred embodiments with reference to the accompanying drawings, in which
Figure 1 illustrates a simplified view of a communication environment;
Figure 2 is a flowchart illustrating an example embodiment; and
Figure 3 illustrates a simplified example of an apparatus in which embodiments of the invention may be applied.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain also features, structures, units, modules etc. that have not been specifically mentioned.

The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, embodiments.

Many different radio protocols to be used in communications systems exist. Some examples of different communication systems are the universal mobile telecommunications system (UMTS) radio access network (UTRAN or E-UTRAN), long term evolution (LTE®, known also as E-UTRA), long term evolution advanced (LTE-A®), Wireless Local Area Network (WLAN, WiFi) based on IEEE 802.11 stardard, worldwide interoperability for microwave access (WiMAX), Bluetooth®, personal communications services (PCS) and systems using ultra-wideband (UWB) technology. IEEE refers to the Institute of Electrical and Electronics Engineers. LTE and LTE-A are developed by the Third Generation Partnership Project 3GPP.

Embodiments of the invention are applicable to apparatuses in communication system or any combination of different communication systems that support required functionalities.

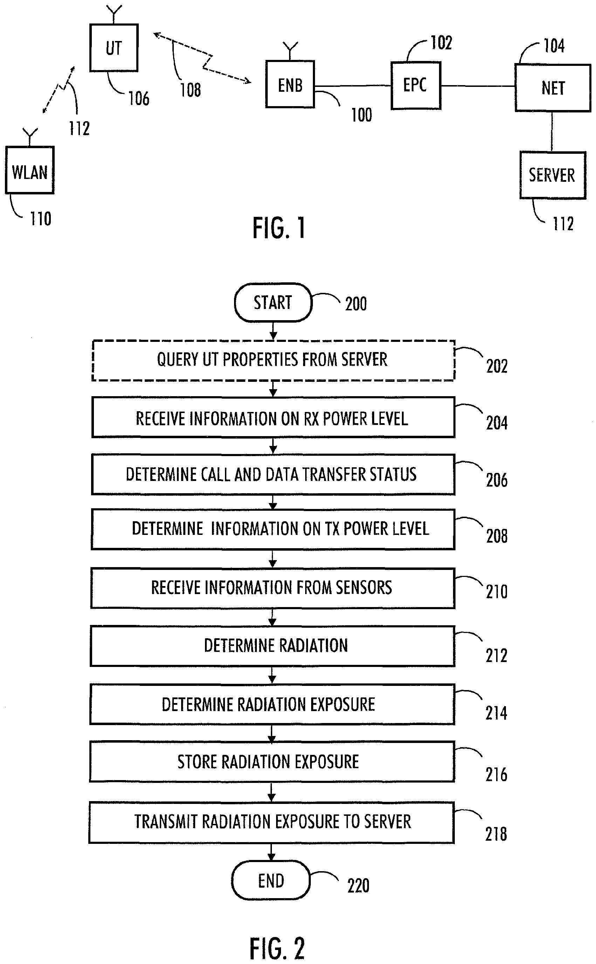

Figure 1 illustrates an example of an access architecture based on a long term evolution advanced (LTE Advanced, LTE-A) system. The LTE-A system is one example of a system where embodiments of the invention may be applied.

Figure 1 illustrates a simplified view of a communication environment only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for communication are irrelevant to the actual invention. Therefore, they need not to be discussed in more detail here.

Figure 1 shows an eNodeB 100 connected to an Evolved Packet Core EPC 102 of a communication system. The eNodeB's form a part of the radio access network (RAN) of the communication system.

The eNodeB 100, that may also be called a base station of the radio system may host the functions for Radio Resource Management: Radio Bearer Control, Radio Admission Control, Connection Mobility Control, Dynamic Resource Allocation (scheduling). Depending on the system, the counterpart on the EPC side can be a serving gateway (S-GW, routing and forwarding user data packets), packet data network gateway (P-GW, for providing connectivity of user devices (UEs) to external packet data networks), and/or mobile management entity (MME), etc. The MME (not shown) is responsible for the overall user terminal control in mobility, session/call and state management with assistance of the eNodeBs through which the user terminals may connect to the network.

The communication system is also able to communicate with other networks, such as a public switched telephone network or the Internet 104. It should be appreciated that eNodeBs or their functionalities may be implemented by using any node, host, server or access point etc. entity suitable for such a usage.

The user terminal UT 106 (also called user device, user equipment, terminal device, etc.) illustrates one type of an apparatus which communicates 108 with the communication network. The communication may comprise both voice calls and data traffic, such as a data connection to a network server 112, for example.

The user terminal typically refers to a portable computing device that includes wireless mobile communication devices operating with or without a subscriber identification module (SIM), including, but not limited to, the following types of devices: a mobile station (mobile phone), smartphone and personal digital assistant (PDA), for example.

The user terminal is configured to perform one or more of user equipment functionalities. The device may also be called a subscriber unit, mobile station, remote terminal, access terminal, user equipment (UE) just to mention but a few names or apparatuses.

Further, although the apparatuses have been depicted as single entities, different units, processors and/or memory units (not all shown in Figure 1) may be implemented

The user terminal 106 may be in radio connection with one or more external transceivers. One type of the external transceiver is the eNodeB 100. In addition to the eNodeB 100, the user terminal 106 may be in connection with one or more wireless network base stations or nodes 110. The base stations 110 may be WLAN or WiFi base stations or routers, for example. In addition, the user terminal may have a Bluetooth connection with another device.

The radio connections between user terminals and base stations or eNodeBs utilise various frequency bands which are standardised and controlled by international treaties and local authorities. For example, GSM systems typically utilise 450, 900 and 1800 MHz frequency bands, UMTS systems typically utilise 800, 1900 and 2100 MHz frequency bands and WLAN or WiFi typically utilise various frequency bands between 2,4 GHz and 5,9 GHz. The mentioned frequency bands are merely illustrative examples as also other frequency bands may be used by the systems in different countries.

Effects of the electromagnetic radiation on users caused by mobile communication devices have been studied since wireless communications systems have been taken into use. The transmitted power levels of the communication devices vary according to propagation effects and the distances between the transceivers. A user terminal situated at a border of the service area of a base station may transmit using considerably greater transmit power compared to a user terminal situated close to the base station. To ensure that health hazards are avoided governments have issued certain limits to the allowed transmit powers of both user terminals and base stations. User terminals are manufactured and communication systems are designed taking these limitations into account.

However, users of the user terminals may want to monitor themselves the radiation exposure they receive from the use of the user terminals. An embodiment of the invention provides an apparatus configured to determine the radiation experienced by a user of a user terminal of a wireless communication system.

Figure 2 is a flowchart illustrating an example embodiment of the invention. The example illustrates the operation of an apparatus configured to determine the amount of electromagnetic radiation the user of the user terminal is exposed to. In an embodiment, the apparatus may be the user terminal or a part of a user terminal running suitable software configured to control the execution of following steps. The example starts at step 200.

In step 202, the apparatus is configured to determine the model of the user terminal, transmit a query to a network server regarding the properties of the user terminal and receive from the server information on the properties of the user terminal. The information may comprise the specific absorption rate (SAR) value of the user terminal.

The SAR value is used as measure of the rate at which energy is absorbed by a human body when exposed to a electromagnetic field caused by radio communication. Each user terminal type is tested and a SAR value for each type of user terminal is published. In an embodiment, a network server is configured to store SAR values of different types of user terminals. A user terminal may transmit a query to the server, the query comprising the type of the user terminal and receive as a response the SAR value of the user terminal type.

This step may be performed once or at given time intervals. The step is optional as the user of the apparatus might as well type the SAR value manually.

In step 204, the apparatus is configured to receive information on the power level of signals at least one radio transceiver of a user terminal has received from one or more external transmitters. In an embodiment, the controller of the apparatus may query from the radio modem or radio modems of the transceiver of the user terminal the strength of the signal or signals received from base stations or eNodeB's the user terminal is connected to.

In step 206, the apparatus is configured to determine information on the call connection and data transfer status of the user terminal. The apparatus may determine whether there is a voice call and/or data transfer presently on-going.

In step 208, the apparatus is configured to determine information on the power level of the signals transmitted by at least one radio transceiver of the user terminal. In an embodiment, the controller of the apparatus is configured to determine the information based on measurements made from the outputs of the radio modem or modems of the transceiver of the user terminal. In an embodiment, the controller of the apparatus is configured to estimate the information based on the power level of the signals received by the user terminal and information on the system the user terminal is communicating with and the user terminal propertied. The call connection and data transfer status may be taken into account.

In step 210, the apparatus is configured to receive information from one or more sensors of the user terminal. Examples of the one or more sensors of the user terminal comprise proximity, acceleration, location and temperature sensors. The use of sensors is explained further below.

In step 212, the apparatus is configured to determine an estimate for the amount of electromagnetic radiation on the basis on the received and determined information and the properties of the user terminal. The SAR value of the user terminal may be utilised in the determination. In an embodiment, the determined amount electromagnetic radiation may comprise information on the radiation originating from the external transmitter and the radio transceiver of the user terminal. Thus, powers of both the received and transmitted signal may be taken into account.

In step 214, the apparatus is configured to determine an estimate for the user radiation exposure. In an embodiment, the information received from the sensors may be utilised in determining the estimate for the user radiation exposure on the basis of estimate for the amount of electromagnetic radiation. The sensors may be used to determine where the user terminal is located in relation to the user of the terminal. If the sensors indicate that the terminal is located away from the user it may be determined that the amount of radiation the user is exposed to is small compared to the amount of electromagnetic radiation. This is due to the attenuation due to distance. This may be the case when there is an on-going data transfer but the proximity and acceleration sensors indicate that the terminal is stable, for example on a table. The sensors may also indicate that the user terminal is in a pocket, for example. If the user terminal is held by the ear of the user, as may be the case when there is an on-going call and no hands-free equipment is in use, the amount of radiation is greater as the distance between the user terminal antenna and user is shorter.

The location sensor may comprise a satellite location receiver such as GPS (Global Positioning System) or Glonass, for example. The location of the user terminal may be determined and stored in connection with the amount of electromagnetic radiation experienced by the user.

In step 216, the apparatus is configured to store the determined amount of electromagnetic radiation experienced by the user in memory. In addition, the apparatus may determine and store the time instant of the determination. The location of the terminal and identification of the user terminal may be stored as well. In an embodiment, the user terminal identification comprises the International Mobile Equipment Identity (IMEI) and the type of the user terminal.

The determined amount of electromagnetic radiation experienced by the user may be shown on the display of the apparatus. In addition, the apparatus may display cumulative radiation values. The displaying of the radiation values may be a user selectable option.

In step 218, the apparatus is configured to control the transmission of the information on the determined amount to a network server. The user terminal identification, location of the terminal and time instant of the determination may be transmitted to a network server as well. The storing of the radiation values to a network server may be a user selectable option. In an embodiment, the user terminal identification comprises the International Mobile Equipment Identity (IMEI) and the type of the user terminal.

The embodiment ends in step 220.

In an embodiment, the apparatus may be configured to determine the amount of electromagnetic radiation experienced by the user of the user terminal only when the user terminal is closer than a predetermined distance to the user.

In an embodiment, the above described procedure may be executed continuously. For example, the information on the received and transmitted power may be read at given time intervals. In an embodiment, the interval is 1 to 2 seconds. The call connection status and data transfer status and information from the sensors may as well be monitored continuously or at given time intervals.

The radiation value may be determined continuously or at given time intervals. The determined value may be shown on the display of the apparatus and stored in the memory of the apparatus. In an embodiment, storing frequency is not the same as the determination and display frequency. For example, radiation values may be stored in memory less frequently than determined and shown.

There are various ways for determining and storing radiation related data. In an embodiment, cumulative values may be determined and stored in the memory (and in the network server). In some embodiments, only cumulative values are stored. For example, the apparatus may be configured to determine cumulative radiation values one per each hour, i.e. the radiation experienced by the user during each hour is determined and stored.

In addition, values related to radiation based on received signal powers and transmitted signal powers may be determined stored independently. Furthermore, radiation values related to different external transmitters may be determined and stored independently. Thus, radiation values related to cellular communication and values related to WLAN/WiFi communication may be stored determined and separately.

In an embodiment, radiation values related to voice calls and values related to data transfer may be determined and stored separately. This is based on the call connection and data transfer status information.

The apparatus may be configured to continuously estimate the radiation the user is exposed to. The radiation values vary depending on the usage of the user terminal. The user may be aware of the radiation caused by voice calls as the user terminal is actively used by the user. However, data traffic may be performed by the user terminal independently without user intervention. The terminal may be configured to check email and social media updates continuously or at given time intervals. This usage causes radiation exposure which the user may not be aware of. The cumulative radiation exposure values determined by the apparatus and shown to the user may help the user to use the user terminal safely.

In an embodiment, the above mentioned values are stored in the user terminal memory and transmitted to a network server at given time intervals. For example, the determined information may be sent to the network server once per day.

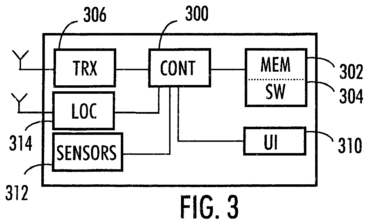

Figure 3 illustrates an embodiment. The figure illustrates a simplified example of an apparatus in which embodiments of the invention may be applied. In some embodiments, the apparatus is a user terminal or a part of a user terminal.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 300 configured to control at least part of the operation of the apparatus. The control circuitry 300 is configured to execute one or more applications.

The apparatus may comprise a memory 302 for storing data and/or applications. Furthermore the memory may store software 304 executable by the control circuitry 300. The memory may be integrated in the control circuitry.

The apparatus may comprise a communication interface 306. The communication interface is operationally connected to the control circuitry 300. The communication interface may comprise a transceiver which enables the apparatus to communicate with other apparatuses and be in connection with the internet, for example. The communication interface may comprise several radio units enabling the apparatus to utilise for communication a cellular network such as LTE, LTE-A, UMTS, or a wireless network (WLAN, WiFi, WiMAX).

The software 304 may comprise a computer program comprising program code means adapted to cause the control circuitry 300 of the apparatus to control and communicate with the communication interface 306.

The apparatus may further comprise user interface 310 operationally connected to the control circuitry 300. The interface may comprise a (touch sensitive) display, a keypad, a microphone, and a speaker, for example.

The apparatus may further comprise sensors 312. The sensors may comprise proximity, acceleration, location and temperature sensors, for example. The location sensor also may be realized with a satellite positioning receiver 314 which enables the controller to determine the location of the apparatus.

In an embodiment, the applications may cause the apparatus to receive information on the power level of signals at least one radio transceiver of a user terminal has received from one or more external transmitters; determine information on the power level of the signals transmitted by at least one radio transceiver of the user terminal; determine information on the call connection and data transfer status of the user terminal; receive information from one or more sensors of the user terminal; determine the amount of electromagnetic radiation the user of the user terminal is exposed to on the basis on the received and determined information and properties of the user terminal; store information on the determined amount in the memory; and control the transmission of the information on the determined amount to a cloud server.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or control circuitries able to perform the above-described steps may be implemented as an electronic digital computer, or a circuitry which may comprise a working memory (RAM), a central processing unit (CPU), and a system clock. The CPU may comprise a set of registers, an arithmetic logic unit, and a controller. The controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst a number of computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

An embodiment provides an apparatus, comprising means for receiving information on the power level of signals at least one radio transceiver of a user terminal has received from one or more external transmitters; means for determining information on the power level of the signals transmitted by at the least one radio transceiver of the user terminal; means for determining information on the call connection and data transfer status of the user terminal: receiving information from one or more sensors of the user terminal; means for determining the amount of electromagnetic radiation the user of the user terminal is exposed to on the basis on the received and determined information and properties of the user terminal; means for storing information on the determined amount in the memory; and means for controlling the transmission of the information on the determined amount to a network server.

It will be obvious to a person skilled in the art that, as the technology advances, the inventive concept can be implemented in various ways. The invention and its embodiments are not limited to the examples described above but may vary within the scope of the claims.

## Claims

1. An apparatus, comprising:
at least one processor; and
at least one memory including computer program code,
the at least one memory and the computer program code configured to, with the at least one processor, cause the apparatus at least to:
receive (204) information on a power level of signals at least one radio transceiver of a user terminal has received from more than one external transmitters;
determine (208) information on a power level of signals transmitted by the at least one radio transceiver of the user terminal;
determine (206) information on a call connection and data transfer status of the user terminal:
receive (210) information from one or more sensors of the user terminal;
determine (214) the amount of electromagnetic radiation the user of the user terminal is exposed to separately for call connections and data transfer traffic on the basis on the received and determined information and properties of the user terminal; and
store (216) information on the determined amount in the memory separately for each external transmitter.

2. The apparatus of claim 1, the at least one memory and the computer program code configured to, with the at least one processor, cause the apparatus further to: control the transmission of the information on the determined amount to a network server

3. The apparatus of claim 1 or 2, wherein the information on the determined amount electromagnetic radiation comprises information on the radiation originating from the external transmitter and the at least one radio transceiver of the user terminal.

4. The apparatus of any preceding claim, the at least one memory and the computer program code configured to, with the at least one processor, cause the apparatus further to:
determine how close the user terminal is to the user on the basis of the information received from one or more sensors of the user terminal.

5. The apparatus of any preceding claim, the at least one memory and the computer program code configured to, with the at least one processor, cause the apparatus further to:
determine and store cumulative values for the amount of electromagnetic radiation the user of the user terminal is exposed to.

6. The apparatus of any preceding claim, the at least one memory and the computer program code configured to, with the at least one processor, cause the apparatus further to:
determine the model of the user terminal;
transmit a query to a cloud server regarding the properties of the user terminal;
receive from the cloud server information on the properties of the user terminal.

7. The apparatus of claim 6, wherein information on the properties of the user terminal comprises the specific absorption rate (SAR) value of the user terminal.

8. The apparatus of any preceding claim, wherein the one or more sensors of the user terminal comprises proximity, acceleration, location and temperature sensors.

9. A method in an apparatus, comprising:
receiving (204) information on a power level of signals at least one radio transceiver of a user terminal has received from more than one external transmitters;
determining (208) information on a power level of signals transmitted by at the least one radio transceiver of the user terminal;
determining (206) information on a call connection and data transfer status of the user terminal:
receiving (210) information from one or more sensors of the user terminal;
determining (214) the amount of electromagnetic radiation the user of the user terminal is exposed to separately for call connections and data transfer traffic on the basis on the received and determined information and properties of the user terminal;
storing (216) information on the determined amount in the memory separately for each external transmitter; and
controlling (218) the transmission of the information on the determined amount to a network server.

10. A computer program product embodied on a distribution medium readable by a computer and comprising program instructions which, when loaded into an apparatus, execute the steps:
receiving (204) information on a power level of signals at least one radio transceiver of a user terminal has received from more than one external transmitters;
determining (208) information on a power level of signals transmitted by the at least one radio transceiver of the user terminal;
determining (206) information on a call connection and data transfer status of the user terminal:
receiving (210) information from one or more sensors of the user terminal;
determining (214) the amount of electromagnetic radiation the user of the user terminal is exposed to separately for call connections and data transfer traffic on the basis on the received and determined information and properties of the user terminal;
storing (216) information on the determined amount in the memory separately for each external transmitter; and
controlling (218) the transmission of the information on the determined amount to a network server.

## Patentansprüche

1. Vorrichtung, umfassend:
zumindest einen Prozessor; und
zumindest einen Speicher, der Computerprogrammcode aufweist,
wobei der zumindest eine Speicher und der Computerprogrammcode ausgebildet sind, um mit dem zumindest einen Prozessor die Vorrichtung zu veranlassen zumindest zum:
Empfangen (204) von Information auf einem Leistungspegel von Signalen, die zumindest ein Radioempfänger eines Nutzerterminals von mehr als einem externen Sender empfangen hat;
Bestimmen (208) von Information auf einem Leistungspegel von Signalen, übertragen von dem zumindest einen Radioempfänger des Nutzerterminals;
Bestimmen (206) von Informationen über eine Rufverbindung und einen Datenübertagungsstatus des Nutzerterminals;
Empfangen (210) von Information von einem oder mehreren Sensoren des Nutzerterminals;
Bestimmen (214) der Menge an elektromagnetischer Strahlung, der der Nutzer des Nutzerterminals ausgesetzt ist, separat für Rufverbindungen und Datenübertragungsverkehr, auf der Basis der empfangenen und bestimmten Information und Eigenschaften des Nutzerterminals; und
Speichern (216) von Information über die bestimmte Menge in dem Speicher, getrennt für jeden externen Sender.

2. Vorrichtung nach Anspruch 1, wobei der zumindest eine Speicher und der Computerprogrammcode ausgebildet sind, um mit dem zumindest einen Prozessor die Vorrichtung weiterhin zu veranlassen zum: Steuern der Übertragung der Information über die bestimmte Menge zu einem Netzwerkserver.

3. Vorrichtung nach Anspruch 1 oder 2, wobei die Information über die bestimmte menge an elektromagnetischer Strahlung Information über die von dem externen Sender und dem zumindest einen Radioempfänger des Nutzerterminals ausgehende Strahlung umfasst.

4. Vorrichtung nach einem der vorhergehenden Ansprüche, wobei der zumindest eine Speicher und der Computerprogrammcode ausgebildet sind, um mit dem zumindest einen Prozessor die Vorrichtung weiterhin zu veranlassen zum:
Bestimmen, wie nah das Nutzerterminal dem Nutzer ist, auf der Basis von der Information, die von einem oder mehreren Sensoren des Nutzerterminals empfangen wurde.

5. Vorrichtung nach einem der vorhergehenden Ansprüche, wobei der zumindest eine Speicher und der Computerprogrammcode ausgebildet sind, um mit dem zumindest einen Prozessor die Vorrichtung weiterhin zu veranlassen zum:
Bestimmen und Speichern kumulativer Werte für die Menge an elektromagnetischer Strahlung, der der Nutzer des Nutzerterminals ausgesetzt ist.

6. Vorrichtung nach einem der vorhergehenden Ansprüche, wobei der zumindest eine Speicher und der Computerprogrammcode ausgebildet sind, um mit dem zumindest einen Prozessor die Vorrichtung weiterhin zu veranlassen zum:
Bestimmen des Modells des Nutzerterminals;
Übertragen einer Abfrage in Bezug auf die Eigenschaften des Nutzerterminals zu einem Cloud-Server;
Empfangen der Cloud-Server-Information über die Eigenschaften des Nutzerterminals.

7. Vorrichtung nach Anspruch 6, wobei Information über die Eigenschaften des Nutzerterminals einen Wert der spezifische Absorptionsrate (SAR) des Nutzerterminals umfasst.

8. Vorrichtung nach einem der vorhergehenden Ansprüche, wobei einer oder mehrere Sensoren des Nutzerterminals Näherungs-, Beschleunigungs-, Orts- und Temperatursensoren umfassen.

9. Ein Verfahren in einer Vorrichtung, umfassend:
Empfangen (204) von Information auf einem Leistungspegel von Signalen, die zumindest ein Radioempfänger eines Nutzerterminals von mehr als einem externen Sender empfangen hat;
Bestimmen (208) von Information auf einem Leistungspegel von Signalen, übertragen von dem zumindest einen Radioempfänger des Nutzerterminals;
Bestimmen (206) von Informationen über eine Rufverbindung und einen Datenübertagungsstatus des Nutzerterminals:
Empfangen (210) von Information von einem oder mehreren Sensoren des Nutzerterminals;
Bestimmen (214) der Menge an elektromagnetischer Strahlung, der der Nutzer des Nutzerterminals ausgesetzt ist, separat für Rufverbindungen und Datenübertragungsverkehr, auf der Basis der empfangenen und bestimmten Information und Eigenschaften des Nutzerterminals;
Speichern (216) von Information über die bestimmte Menge in dem Speicher, getrennt für jeden externen Sender; und
Steuern (218) der Übertragung der Information über die bestimmte Menge zu einem Netzwerkserver.

10. Computerprogrammprodukt, verkörpert auf einem Verteilungsmedium, lesbar von einem Computer, und umfassend Programmanweisungen, die, wenn in eine Vorrichtung geladen, die Schritte ausführen:
Empfangen (204) von Information auf einem Leistungspegel von Signalen, die zumindest ein Radioempfänger eines Nutzerterminals von mehr als einem externen Sender empfangen hat;
Bestimmen (208) von Information auf einem Leistungspegel von Signalen, übertragen von dem zumindest einen Radioempfänger des Nutzerterminals;
Bestimmen (206) von Informationen über eine Rufverbindung und einen Datenübertagungsstatus des Nutzerterminals:
Empfangen (210) von Information von einem oder mehreren Sensoren des Nutzerterminals;
Bestimmen (214) der Menge an elektromagnetischer Strahlung, der der Nutzer des Nutzerterminals ausgesetzt ist, separat für Rufverbindungen und Datenübertragungsverkehr, auf der Basis der empfangener und bestimmter Information und Eigenschaften des Nutzerterminals;
Speichern (216) von Information über die bestimmte Menge in dem Speicher, getrennt für jeden externen Sender; und
Steuern (218) der Übertragung der Information über die bestimmte Menge zu einem Netzwerkserver.

## Revendications

1. Appareil, comprenant :
au moins un processeur ; et
au moins une mémoire comprenant un code de programme informatique,
la au moins une mémoire et le code de programme informatique étant configurés pour, à l'aide du au moins un processeur, amener l'appareil au moins à :
recevoir (204) des informations sur un niveau de puissance de signaux qu'au moins un émetteur-récepteur radio d'un terminal d'utilisateur a reçu de plusieurs émetteurs externes ;
déterminer (208) des informations sur un niveau de puissance de signaux émis par le au moins un émetteur-récepteur radio du terminal utilisateur ;
déterminer (206) des informations sur un état de connexion d'appel et de transfert de données du terminal utilisateur ;
recevoir (210) des informations provenant d'un ou plusieurs capteurs du terminal utilisateur;
déterminer (214) la quantité de rayonnement électromagnétique à laquelle l'utilisateur du terminal utilisateur est exposé séparément pour des connexions d'appel et un trafic de transfert de données sur la base des informations reçues et déterminées et des propriétés du terminal utilisateur ; et
stocker (216) des informations sur la quantité déterminée dans la mémoire séparément pour chaque émetteur externe.

2. Appareil selon la revendication 1, la au moins une mémoire et le code de programme informatique étant configurés pour, à l'aide du au moins un processeur, amener l'appareil en outre à : commander la transmission des informations sur la quantité déterminée à un serveur de réseau.

3. Appareil selon la revendication 1 ou 2, dans lequel les informations sur la quantité déterminée de rayonnement électromagnétique comprennent des informations sur le rayonnement provenant de l'émetteur externe et du au moins un émetteur-récepteur radio du terminal utilisateur.

4. Appareil selon l'une quelconque des revendications précédentes, la au moins une mémoire et le code de programme informatique étant configurés pour, à l'aide du au moins un processeur, amener l'appareil en outre à : déterminer à quel point le terminal utilisateur est proche de l'utilisateur sur la base des informations reçues d'un ou plusieurs capteurs du terminal utilisateur.

5. Appareil selon l'une quelconque des revendications précédentes, la au moins une mémoire et le code de programme informatique étant configurés pour, à l'aide du au moins un processeur, amener l'appareil en outre à : déterminer et mémoriser des valeurs cumulées pour la quantité de rayonnement électromagnétique à laquelle l'utilisateur du terminal utilisateur est exposé.

6. Appareil selon l'une quelconque des revendications précédentes, la au moins une mémoire et le code de programme informatique étant configurés pour, à l'aide du au moins un processeur, amener l'appareil en outre à :
déterminer le modèle du terminal utilisateur ;
transmettre une requête à un serveur cloud en ce qui concerne les propriétés du terminal utilisateur ;
recevoir du serveur cloud des informations sur les propriétés du terminal utilisateur.

7. Appareil selon la revendication 6, dans lequel les informations sur les propriétés du terminal utilisateur comprennent la valeur du taux d'absorption spécifique (SAR) du terminal utilisateur.

8. Appareil selon l'une quelconque des revendications précédentes, dans lequel les un ou plusieurs capteurs du terminal utilisateur comprennent des capteurs de proximité, d'accélération, d'emplacement et de température.

9. Procédé dans un appareil, comprenant les étapes consistant à :
recevoir (204) des informations sur un niveau de puissance de signaux qu'au moins un émetteur-récepteur radio d'un terminal utilisateur a reçu de plusieurs émetteurs externes ;
déterminer (208) des informations sur un niveau de puissance de signaux transmis par au moins un émetteur-récepteur radio du terminal utilisateur ;
déterminer (206) des informations sur un état de connexion d'appel et de transfert de données du terminal utilisateur ;
recevoir (210) des informations provenant d'un ou plusieurs capteurs du terminal utilisateur ;
déterminer (214) la quantité de rayonnement électromagnétique à laquelle l'utilisateur du terminal utilisateur est exposé séparément pour des connexions d'appel et un trafic de transfert de données sur la base des informations reçues et déterminées et des propriétés du terminal utilisateur ;
stocker (216) des informations sur la quantité déterminée dans la mémoire séparément pour chaque émetteur externe ; et
commander (218) la transmission des informations sur la quantité déterminée à un serveur de réseau.

10. Produit de programme informatique réalisé sur un support de distribution lisible par un ordinateur et comprenant des instructions de programme qui, lorsqu'elles sont chargées dans un appareil, exécutent les étapes consistant à :
recevoir (204) des informations sur un niveau de puissance de signaux qu'au moins un émetteur-récepteur radio d'un terminal utilisateur a reçu de plusieurs émetteurs externes ;
déterminer (208) des informations sur un niveau de puissance de signaux transmis par le au moins un émetteur-récepteur radio du terminal utilisateur ;
déterminer (206) des informations sur un état de connexion d'appel et de transfert de données du terminal utilisateur ;
recevoir (210) des informations provenant d'un ou plusieurs capteurs du terminal utilisateur ;
déterminer (214) la quantité de rayonnement électromagnétique à laquelle l'utilisateur du terminal utilisateur est exposé séparément pour des connexions d'appel et un trafic de transfert de données sur la base des informations reçues et déterminées et des propriétés du terminal utilisateur ;
stocker (216) des informations sur la quantité déterminée dans la mémoire séparément pour chaque émetteur externe ; et
commander (218) la transmission des informations sur la quantité déterminée à un serveur de réseau.
